# EUROPEAN PATENT APPLICATION

(11) **EP 2 538 256 A1**
(43) Date of publication of application: **26.12.2012**
(21) Application number: 11170623.0
(22) Date of filing: 20.06.2011
(51) Int. Cl.: G02B 6/44

(54) **Cable termination device**

(71) Applicant: Tyco Electronics Raychem BVBA, 3010 Kessel-Lo (BE)
(72) Inventor: Cornelissen, Kurt, 2235 Hulshout (BE); Amoyal, William Eric, 1000 Brussels (BE)
(74) Representative: Obst, Bernhard

(57) **Abstract**

The present invention relates to a Cable termination device (1) for cables (300) having an optical fiber (310) and at least one cover element (320), wherein at one end (305) of said cables (300) a certain length of said at least one cover element (320) has been removed from the fiber (310). The cable termination device (1) comprises a main body (100) for accommodating a cable end (305), wherein an exit end (106) of the main body (100) is provided with an end wall (160), said end wall (160) comprising an exit slit (170) having a width (180) for passing through the optical fiber (310) but not the at least one cover element (320). The invention also relates to a method for terminating an optical cable (300) at a cable termination device (1).

## Description

The present invention relates to a cable termination device. More in particular, the present invention relates to a termination device for cables having an optical fiber covered by at least one cover element.

In cables comprising optical fibers the optical fiber is the core element surrounded by one ore more protective elements. The protective elements comprise for example strength members like aramid fibers sold under the commercial name KEVLAR®, a tube and a cable jacket. All different protective elements are considered here to be cover elements of the optical fiber.

In certain installations it is desired to just to handle the optical fibers without the cable jacket, the strength members, and other protective elements. In these situations a certain length of the cover elements at the end of the cable is removed. Further it is advantageous to fix the cable end in a so called cable termination unit.

Cable termination units are well known in the art.

EP 1 709 469 A1 discloses a crimp comprising a hollow crimp body that is open at each end and includes, at a first end, a first crushable crimp tube for crimping onto a connector; and at a second end a second crushable crimp tube for crimping onto a cable, the portion of the crimp between the said ends including a recess for engagement by a closure housing.

EP 1 399 770 A1 discloses a termination unit for terminating optical fiber cables. The termination unit comprises a base member and at least one detent member. The base member has at least one pair of upstanding walls defining a space for accepting detent members having a groove for accepting an optical fiber cable. The detent members each have a protrusion extending substantially transversely of the groove and a recess for accepting a corresponding protrusion of another, adjacent detent member.

EP 1 373 954 A1 describes a termination device for cables having at least one flexible strength member. The termination device comprises a retention member for retaining the strength member and a base member for accommodating the retention member. The base member is provided with clamping means which prevent any longitudinal movement of the retention member. In addition, the clamping means exert pressure on the retention member accommodated in the base member so as to be able to clamp the strength member between the clamping means and at least one surface of the retention member.

All termination units have provisions to affix the strength members to the termination device. This usually involves some tedious work for the installer. In many situations where the axial forces acting on the cable end to be terminated are not very strong it is not necessary to affix the strength members to the termination device. In theses situation the strength members are often even cut off together with a certain length of the other cover elements like the cable jacket. Unfortunately in some cases the cables ends are not positioned precisely at the termination devices. In some instances parts of the cable still comprising cover elements protrude beyond the cable termination device. This hampers the correct handling of the optical fibers in the installation unit.

It is therefore an object of the present invention to provide a cable termination device which eliminates any disadvantages of the Prior Art and which secures a cable end in a fixed position.

It is another object of the present invention to provide a cable termination device which consists of few parts.

It is a further object of the present invention to provide a cable termination device which is easy to apply.

In order to meet these and other objects, the present invention provides a cable termination device for a cables having at least one optical fiber and at least one cover element, wherein at one end of said cables a certain length of said at least one cover element has been removed from the at least one fiber, the device comprising a main body for accommodating a cable end, characterized in that an exit end of the main body is provided with an end wall, said end wall comprising an exit slit having a width for passing through the at least one optical fiber but not the at least one cover element.

Further a method of terminating a cable having at least one optical fiber and at least one cover element in a cable termination device is provided, wherein the cable termination device comprises a main body for accommodating a cable end, and wherein an exit end of the main body is provided with an end wall, said end wall comprising an exit slit having a width for passing through the at least one optical fiber but not the at least one cover element, said method comprising the steps:
removing a certain length of said at least one cover element from the at lest one fiber at one end of the cable,
inserting the cable end in a cable termination device, in such away that the at least one fiber end, of which the cover element has been removed, passes through the exit slit of the end wall an extends beyond it and an end part of the cable still comprising the at least one cover element is positioned in the main body.

By providing the end wall with a slit that is adapted to the diameter of the at least one optical fiber ensures that the at least one optical fiber can protrude beyond the end wall of the termination device. On the other hand the parts of the cable still comprising the at least one cover element can not be positioned beyond the end wall. The invention may thus be used for single fiber cables as well as multiple fiber cables and a ribbon with multiple fibers inside a cover element.

In a preferred embodiment the cable end is positioned in the main body of the termination device with the edge of the at least one cover element abutting against the end wall. By this a defined position of the cable end is ensured.

In a preferred embodiment the step of removing the said certain length of the at least one cover element comprises to cut off the at least one length of the cover element. Preferably all cover elements including any strength members are cut off at the same length from the end of the cable. By this one obtains a unified edge for all cover elements and a well defined face for abutting against the end wall.

Preferably said main body is provided with a reception channels extending axially from an entrance end of said main body to said exit end, said reception channel being radially defined at least by a base member and sidewall extending upwardly from the base member, wherein the side walls comprise recesses to accommodate at least one tie element to tie down a cable end accommodated in the reception channel to the base member. Thus in a preferred embodiment the cable end positioned in the termination device is tied to the main body of the cable termination device by at least one tie element. The tie element is preferably a cable tie or wire wrap. The recesses in the opposite side wall are located preferably at the same axial position along the reception channel. By using cable ties it is very easy to affix the part of the cable end still comprising the cover elements to the base member of the main body.

In a preferred embodiment the base member has a curved surface. In this way the surface conforms to the outer shape of the cable to be terminated or a protective element wrapped around it. The probability to damage the cable during fixation is reduced by this.

This probability is further reduced in a preferred embodiment by wrapping a resilient wrap element around a part of the cable end still comprising the at least one cover element prior to inserting the cable end into the cable termination device.

The resilient wrapping member is usually provided as a sheet. One side comprises an adhesive covered by a lining paper. During the installation process the lining paper is removed and the resilient wrap element attached to the cover element at that part of the end of the cable still comprising the at least one cover element. The resilient material is for example made of a closed-cell foam.

To achieve a good retention of the cable in the cable termination device a preferred embodiment of the cable termination device comprises at least one projecting element, protruding from the base member and/or the side walls into the reception channel to engage with said part of the cable end accommodated in the reception channel and to take up axial pull forces acting on said cable.

The best results are achieved by having projecting elements like ribs, pins or teeth and also fixing said resilient wrap around element using an adhesive to affix the wrap around element to the cover element, i.e. the cable jacket. Due to the resilient nature of the wrap around element the projecting elements engage with the wrap around element by locally protruding into the resilient element. By this engagement forces acting in an axial direction are transferred at least in part to the projecting element or elements.

In a preferred embodiment at least the base member and the side walls defining and bounding the reception channel radially as well as the end wall terminating the reception channel in the axial direction towards the exit end of the main body are formed integrally. This way the installer has to handle only one part besides the cable, tie elements and possibly a resilient wrap around element.

In a preferred embodiment thus the cable termination device comprises only the main body. This main body is preferably formed by injection molding or injection compression molding.

An easy installation is guaranteed with an embodiment in which the cable reception channel is open sided along the complete axial direction of the main body. This way the cable end can be inserted into the main body, i.e. the cable reception channel in a radial direction rather than inserting it in an axial direction. Complicated threading of the fiber in the axial direction through the reception channel and the slit of the end wall can be omitted. Thus installation is much easier and faster. For this purpose the open side of the reception channel coincides with opening of the slit in the end wall. Thus not only the part of the cable end still comprising the at least one cover element but also the fiber can be inserted in the reception channel and the slit in the end wall, respectively, in one movement along one direction.

It is preferred that several cables are terminated in a common installation. Therefore in a preferred embodiment the cable termination device is provided with engagement members for attaching the cable termination device to a member of this common installation. Preferably the cable termination device can be attached in a removable fashion. In one embodiment several cable termination devices can be snapped onto a base plate of an installation. The main body provides laterally projecting protrusions which can engage with resilient hooks protruding in a mostly perpendicular direction from a flat base plate. The hooks also limit the movement at least in a lateral direction. For defining the axial position and also preventing movement in the axial direction the base plate may comprise further slot defining elements extending upward from the base plate.

The present invention will further be explained below with reference to the accompanying drawings, in which:
- Figure 1: shows, in perspective, a cable termination device according to the present invention.
- Figure 2: shows, in perspective, the cable termination device of Fig. 1 from a different viewing angle.
- Figure 3: shows, in perspective, a cable termination device of Fig. 1 accommodating a cable end from yet another different viewing angle.
- Figure 4: shows, in perspective, another embodiment of a cable termination device.
- Figure 5: shows, in perspective, a further cable termination device having an end wall snapped onto the main body.
- Figure 6: shows, in perspective, a base plate of an installation unit.
- Figure 7: shows, in perspective, a cut-out of the base plate of Figure 1 from a different viewing angle, having a cable termination device snapped onto the base plate, in which a cable end is terminated.
- Figure 8: shows, in perspective, a different cut-out of the base plate of Figure 1 from yet another different viewing angle, having a cable termination device snapped onto the base plate, in which a cable end is terminated.

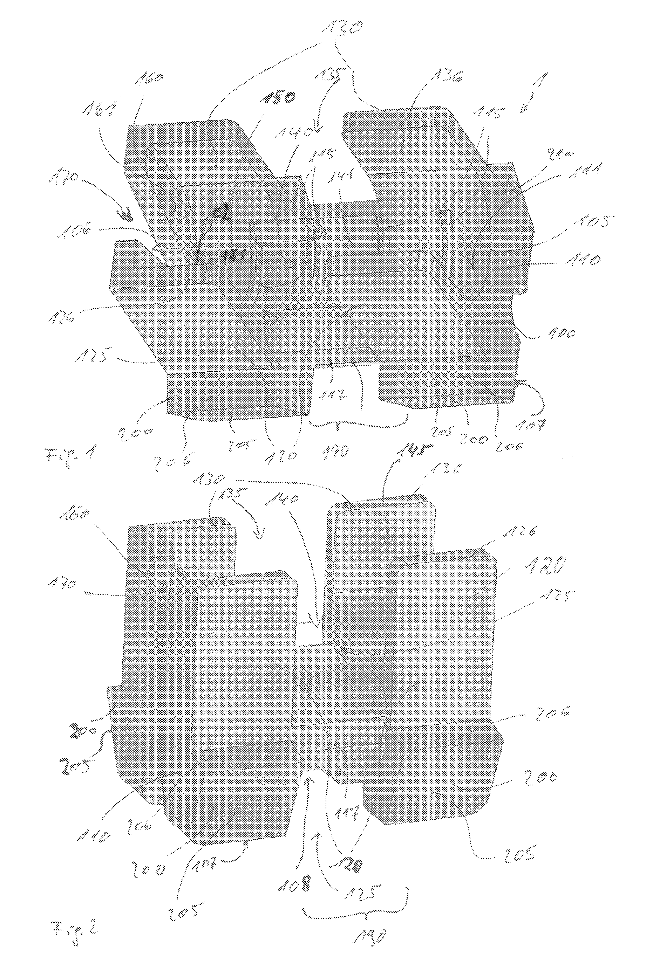

In Figures 1 and 2 a cable termination device 1 is shown in perspective from different viewing angles. The same technical features are referred to with identical numerals throughout all figures. The cable termination device comprises a main body 100. The main body 100 has an entrance end 105 and an exit end 106. The main body 100 comprises a base member 110 and side walls 120, 130 radially defining a reception channel 140. In an axial direction 150 the reception channel 140 is terminated by an end wall 160. The end wall is provided with a slit 170. In this embodiment the slit 170 is V-shaped. The end wall 160 can also be referred to as a cover element retaining feature, a cover element abutment feature, a cover element blocking feature, or like terms.

The surface 111 of the base member 110 defining the bottom 141 of the reception channel 140 is curved. Preferably the curved surface 111 is similar to an inner surface of a cylinder. The surface 111 of the base element 110 is also provided with several ribs 115 being oriented perpendicular to the axial direction 150. The ribs project into the reception channel 140.

The side walls 120, 130 bounding the reception channel in the lateral direction 151, 152, both have a slot or a recess 125, 35 respectively. The recesses 125, 135 are positioned in the same location along the axial direction in both side walls 120, 130. They are thus mutually opposite. The recesses 125, 135 extend from the top 126, 136 of the respective sidewalls to the bottom face 107 of the main body 100. The bottom face 107 is provided with a recess 108 connecting the recesses 125, 135. Thus the base member 110 comprises just a bottom element 117 in this tying section 190 of the main body 100. The recesses 125, 135, and 108 can therefore jointly accommodate one, preferably two or more cable ties to affix a part of the cable end accommodated in the reception channel 140 to the main body 100.

The reception channel 140 is provided with an open side 145, in the embodiment shown, opposite to the bottom 141 of the reception channel. The open side extends along the whole length of the reception channel 140 in the axial direction 150.

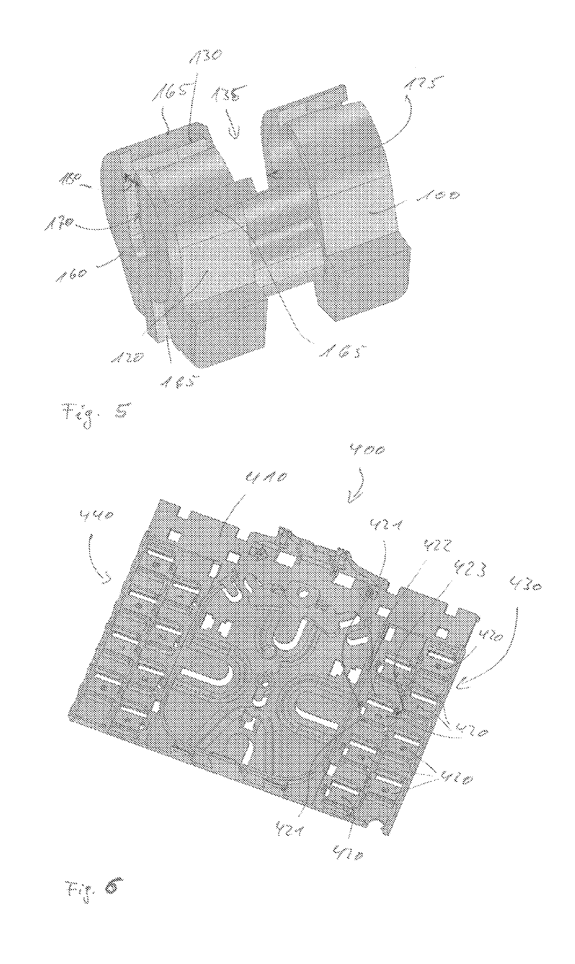

The base member 110 has laterally projection protrusions 200. Side faces 205 of the protrusions are slightly tapered towards the bottom face 107 of the main body 100. The upper faces 206 of the protrusions 200 are engagement surfaces for hook or snap elements positioned on a base plate of an installation unit, as will be explained below with reference to figures 6 to 8. The protrusions 200 can also be referred to as retention structures, catches, snap-fit elements or like terms.

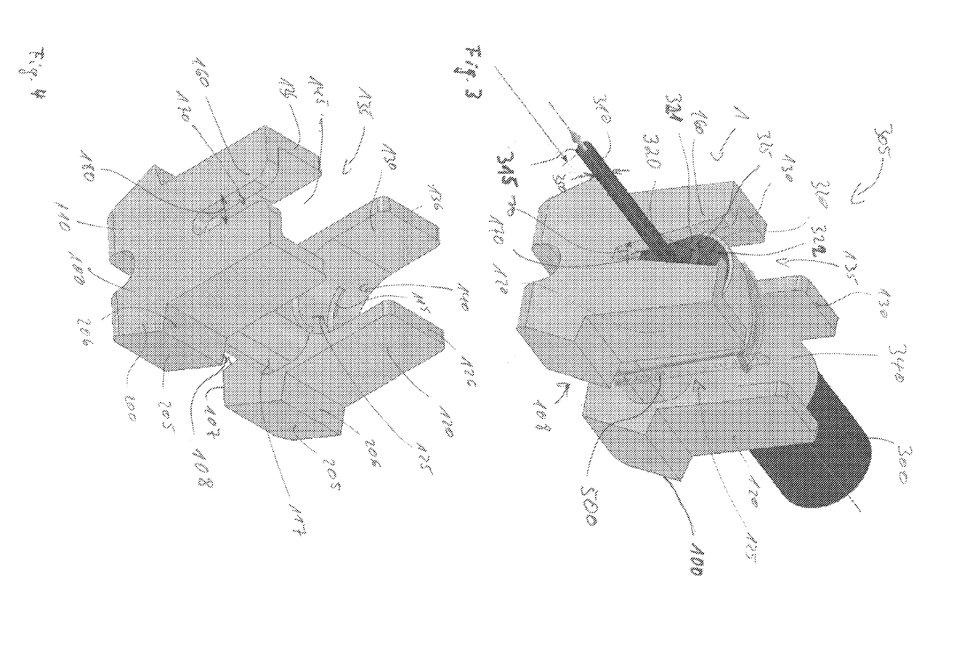

The termination of an optical cable will be explained with reference to figure 3.

Figure 3 shows an optical cable 300 being terminated at the cable termination device 1. The cable comprises an optical fiber 310 and several cover elements 320. The optical fiber 310 comprises a core and surrounding cladding (not shown as separate elements). The cover elements 320 comprise a tube 321 and cable jacket 322. Usually an optical cable also comprises aramid fibers as strength members (not shown).

When a cable 300 is terminated at a cable termination device 1 a certain length of the cover elements 320 is removed from the optical fiber 310. Preferably the cover elements 320 are all cut off at the same distance from the end 315 of the optical fiber 310. One attains an almost flat end surface 325 of the cover elements.

In a preferred embodiment of a method to terminate an optical cable 300 a resilient wrap element 340 is applied to the part 330 at the end 305 the cable 300, which still comprises the cover elements 320. The wrap element is provided as a sheet of resilient material. One surface of the wrap element 340 is covered by an adhesive. Prior to application the adhesive layer (not shown) is covered by lining paper (not show).

After removal of the lining paper the resilient wrap element 340 is attached to the cable jacket 322 by wrapping the wrap element 340 around the cable. Due to the adhesive the wrap element 340 sticks to the cable jacket 322. The cable 300 is then inserted into the reception channel 140 via the open side 145 into the reception channel 140. Thus with a downward radial movement the part 330 of the cable end 305, still comprising the cover elements 320 is positioned in the main body 100. At the same time the fiber 310 is introduced in the slit 170 of the end wall 160. A width 180 is adapted to the diameter 350 of the optical fiber 310. The width 180 of the slit is dimensioned wide enough so that the optical fiber can pass through the slit 170 and protrude through the end wall 160 and beyond the end wall 160. On the other hand the width 170 is limited that the cover element 320 can not pass through the slit 160. Preferably the part 330 of the cable end 305 still comprising the cover elements 320 is placed in the reception channel 140 with the flat end surface 305 of the cover elements 320 abutting the inner face 161 of the end wall 160.

After placing the cable end 305 in the reception channel 140 of the main body 100 one or preferably two or more tie elements are placed in a wrap around manner around the cable end 305 and the bottom element 117 of the base member 110 in the tying section 190 of the cable termination device1. In fig. 3 one cable tie 500 is shown affixing the cable end 305 and the wrapped around resilient wrap element 340 to the base member 110. The tie elements are preferably cable ties 500 or cable wrappers . The tie elements are accommodated in the recesses 125,135,108. The recesses 125, 135 and 108 form a cable tie receiving arrangement and define a cable tie mounting location. The resilient wrap element 340 protects the cable 300 against damage that otherwise might be afflicted by tying the cable end 305 to the main body 100 of the cable termination device 1. Further the ribs 115 engage with the resilient wrap element 340 to improve the retention against axial forces acting on the cable 300.

In fig. 4 another cable termination device 1 is shown, in perspective. In the embodiment the end wall 160 is provided with a U-shaped slit 170 having a constant width 180.

In fig 5 another embodiment of a cable termination device is shown in perspective. Whereas in all embodiments shown in the other figures the end wall 160 is formed integrally with the main body 100 as part of this main body the embodiment according to figure 5 comprises an end wall 160 with is snapped to the main body100. For this purpose the end wall 160 is provided with hooking elements 165 extending in a vertical direction away from the inner surface 161. The hooking elements engage in the recesses 125, 135 of the side walls 120, 130. In this way the end wall 160 is snapped to the main body 100. As the installer may remove the end wall 160 from the main body or might forget to attach it to the main body 100 prior to affixing the cable end 305, it is preferred to use termination devices 1 with integrally formed end walls 160. On the other hand the embodiment of figure 5 is flexible. End walls 160 having different slit shapes and or slit width 180 can be used with identical main bodies 100.

Figure 6 shows a base plate 410 of an installation 400. Slots 420 for receiving cable termination devices 1 are provided on both sides 430, 440 of the base plate 410. Each slot 420 comprises two resilient snap elements 421 and 422 projecting upward from the base plate 410. The resilient snap elements 421 and 422 are located on opposite sides bounding the slots 420 in a lateral direction. A rear slot wall 423 and a front delimiter 424 both also projecting upward define the slot 420 in the longitudinal or axial direction.

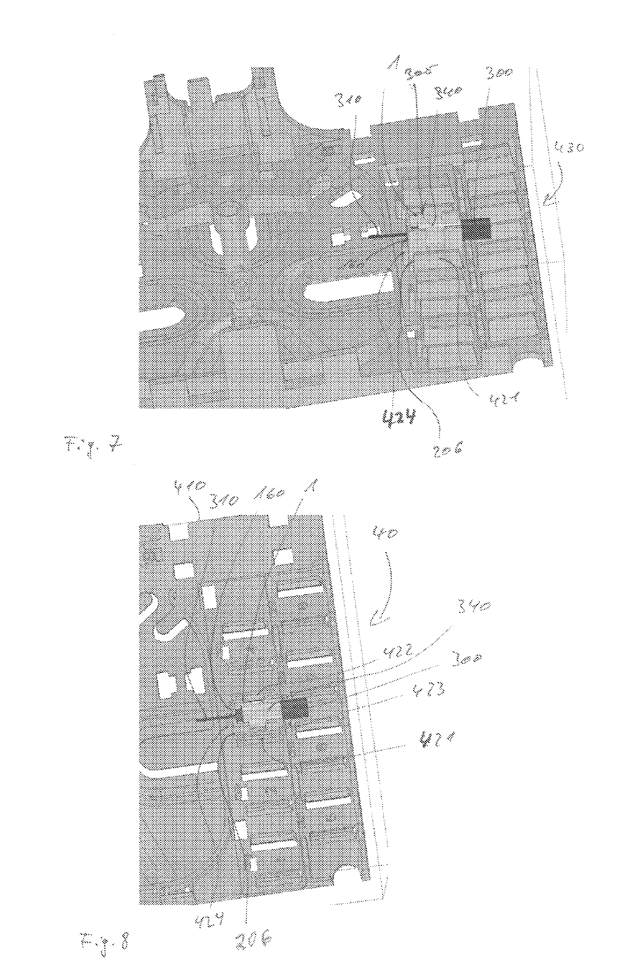

Figure 7 and 8 show different cut-outs of one side 430 of the base plate 400 with one termination device being snapped to a slot 420 on the base plate 400. The cable termination device is terminating an optical fiber cable 300. The cable termination device 1 is snapped into a slot by simply pressing it down. The slightly tapered side surfaces 205 of the protrusions 200 bend the resilient snap elements 421, 422 outward with respect to the slot. Once the cable termination device 1 is placed in the slot 420, the end wall 160 facing the front delimiter 424, the snap elements 421, 422 return to their rest position and hook elements at the top of the resilient snap elements 421, 422 engage with the upper faces 206 of the protrusions 200.

To remove a cable termination device 1 again one bends at least one of the snap elements 421, 422, for example snap element 421 outward away from the center of the respective slot 420. The hook element disengages the upper faces 206 of the protrusions 200 at least on one side of the cable termination device 1. With a combined rotation and upward movement the cable termination device can then be detached from the base plate 400. The rotational part of the movement helps to disengage the hook element of the resilient snap element 422 not being bent away from the attached cable termination device 1.

After cutting the cable ties a cable end 305 can be removed from a cable termination device 1 by just pulling the cable end 305 in the axial direction or preferably pulling it upward towards the open side 145 of the reception channel 140. The cable termination device 1 may be reused to terminate another cable 300.

In certain embodiments the installation 400 can be a fiber management tray having various fiber routing paths, fiber loop storage, and fiber guides providing fiber bend radius protection. The installation 400 can be configured to mount optical components such as splice sleeves, optical power splitters, wavelength divisional multiplexers or other components. In certain embodiments, the installation 400 can be mounted on or within other telecommunications equipment such as enclosures, drawers, racks, panels, housings, trays, etc.

It is preferred to be able to handle the cable termination device separate of any installation. Nevertheless in certain embodiments the cable termination device is formed integrally with the installation device.

The slit 170 can also be referred to as an optical fiber receiver, an optical fiber passage, a fiber pass-through or like terms. In certain embodiments, the slit 170 has an open top end and a closed bottom end. The closed bottom end is preferably spaced above the bottom 141 of the reception channel 140. In certain embodiments, the slit 170 can have a tapered configuration and can be defined by side walls that converge as the side walls extend downwardly toward the closed bottom end. For example, the slit 170 can be V-shaped. In other embodiments the slit 170 is U-shaped.

The different embodiments have been described in connection with a cable just comprising one fiber. It should be mentioned though that without departing from the spirit of the invention also cables having multiple optical fibers or a ribbon with multiple fibers inside a cover element can be terminated according to the invention.

### Reference numerals

- 1: cable termination device
- 100: main body
- 105: entrance end
- 106: exit end
- 107: bottom face
- 108: recess
- 110: base member
- 111: surface
- 115: ribs
- 117: bottom element
- 120: side wall
- 125: recess
- 126: top of side wall 120
- 130: side wall
- 135: recess
- 136: top of side wall 130
- 140: reception channel
- 141: bottom
- 145: open side
- 150: axial direction
- 151: lateral direction
- 152: lateral direction
- 160: end wall
- 161: inner face
- 165: hooking elements
- 170: slit
- 180: width (of slit in end wall)
- 190: tying section
- 200: protrusions
- 205: side faces
- 206: top faces
- 300: cable
- 305: cable end
- 310: optical fiber
- 315: end of optical fiber
- 320: cover elements
- 321: tube
- 322: cable jacket
- 325: end surface
- 330: part still comprising cover elements
- 340: resilient wrap element
- 350: diameter
- 400: installation
- 410: base plate
- 420: slots
- 421: snap element
- 422: snap element
- 423: rear slot wall
- 424: front delimiter
- 500: cable tie.

## Claims

1. Cable termination device (1) for cables (300) having at least one optical fiber (310) and at least one cover element (320), wherein at one end (305) of said cables a certain length of said at least one cover element (320) has been removed from the fiber (310), the device (1) comprising a main body (100) for accommodating a cable end (305),
**characterized in that**
an exit end (106) of the main body (100) is provided with an end wall (160), said end wall (160) comprising an exit slit (170) having a width (180) for passing through the at least one optical fiber (310) but not the at least one cover element (320).

2. Cable termination device (1) of claim 1, **characterized in that** said main body (100) is provided with a reception channel (140) extending axially from an entrance end (105) of said main body (100) to said exit end (106), said reception channel (140) being radially defined at least by a base member (110) and sidewall (120, 130) extending upwardly from the base member (110), wherein the side walls (120, 130) comprise a recess (125, 135) each to accommodate at least one tie element for tying down the cable end (305) accommodated in the reception channel (140) to the base member(110).

3. Cable termination device (1) of claim 2, **characterized in that** the cable is tied to the cable end (305) to the base member (110) by one ore more cable ties (500) received in the recesses (125, 135) of the sidewalls (120, 130).

4. Cable termination device (1) of claims 2 or 3, **characterized in that** said the base member (110) comprises at least one projecting element (115), protruding from the base member (110) and/or the side walls (120, 130) into the reception channel (140) to engage with the cable end (305) accommodated in the reception channel (140) and take up axial pull forces acting on said cable (300).

5. Cable termination device (1) of claims 2 to 4, **characterized in that** the base member (110) has a curved surface (111).

6. Cable termination device (1) of claims 1 to 5, **characterized in that** the main body (100) comprises engagement elements (200) to be snapped to a base plate (410) of an installation unit (400).

7. Cable termination device (1) of claims 2 to 6, **characterized in that** the end wall (160) is formed integrally with the base member (110) and the side walls (120, 130) defining the reception channel (140) radially.

8. Cable termination device (1) of claims 2 to 7, **characterized in that** the cable reception channel (140) is open sided (145) along the complete axial direction of the main body (100).

9. Cable termination device (1) of claims 2 to 8, **characterized in that** the slit (170) is U-shaped.

10. Cable termination device (1) of claims 2 to 9, **characterized in that** the cable (300) comprises a plurality of optical fibers.

11. Method of terminating a cable (300) having at least one optical fiber (310) and at least one cover element (320) in a cable termination device (1), the cable termination device (1) comprising a main body (100) for accommodating a cable end (305), wherein an exit end of the main body (100) is provided with an end wall (160), said end wall (160) comprising an exit slit (170) having a width (180) for passing through the at least one optical fiber (310) but not the at least one cover element (320),
said method comprising the steps:
removing a certain length of said at least one cover element (320) from the at least one optical fiber (310) at one end (305) of the cable (300),
inserting the cable end (305) in a cable termination device (1), in such away that the at least one optical fiber (310) passes through the exit slit (170) of the end wall (160) and extends beyond it and the part (330) of the cable end (305) still comprising the at least one cover element (320) of the cable (300) is positioned in the main body (100).

12. Method of claim 11, **characterized in that** said certain length of the at least one cover element (320) is cut off.

13. Method of claim 12, **characterized in that** the removing of said certain length of said at least one cover element (320) comprises the removal of all other cover elements (321, 322) along said certain length at the end of said cable (300).

14. Method of claims 11 to 13, **characterized in that** a resilient wrap element (340) is wrapped around the cable jacket (322) at the cable end (305) prior to inserting the cable end (305) into the cable termination device (1).

15. Method of claims 11 to 14, **characterized in that** the resilient wrap element (340) is made of foam.

16. Method of claims 11 to 15, **characterized in that** the cable end positioned in the termination device (1) is tied to the main body (100) of the cable termination device (1) by at least one tie element.

17. Method of claims 11 to 16, **characterized in that** the cable termination device (1) is snapped to a base plate (410) of an installation unit (400).
